# EUROPÄISCHE PATENTSCHRIFT

(11) **EP 4 425 085 B1**
(45) Veröffentlichungstag und Bekanntmachung des Hinweises auf die Patenterteilung: **29.01.2025**
(21) Anmeldenummer: 23205725.7
(22) Anmeldetag: 27.02.2023
(51) Int. Cl.: F28F 9/02, H01M 10/6554

(54) **WÄRMEÜBERTRAGERPLATTE**
HEAT EXCHANGER PLATE
PLAQUE D'ÉCHANGEUR DE CHALEUR

(43) Veröffentlichungstag der Anmeldung: 04.09.2024
(62) Teilanmeldung aus: 23158876.5
(73) Patentinhaber: Benteler Automobiltechnik GmbH, 33102 Paderborn (DE)
(72) Erfinder: Düpmeier, Tobias, 33100 Paderborn (DE); Grußmann, Elmar, 33184 Altenbeken (DE); Fortmeier, Günter, 33129 Delbrück (DE)
(74) Vertreter: Ksoll, Peter

(56) Entgegenhaltungen:
- EP-B1- 1 352 171
- EP-B1- 1 764 573
- EP-B1- 2 260 957
- CA-A1- 2 828 990

## Beschreibung

Die Erfindung betrifft eine Wärmeübertragerplatte, insbesondere zur Kühlung einer Batterie von Kraftfahrzeugen. Insbesondere betrifft die vorliegende Erfindung eine Wärmeübertragerplatte wie im Oberbegriff des Anspruchs 1 definiert, und wie in EP 1 764 563 illustriert.

Wärmeübertragerplatten kommen für unterschiedlichste Anwendungen zum Einsatz. Bei einer Wärmeübertragerplatte der vorliegend in Rede stehenden Art handelt es sich insbesondere um eine Kühlplatte zur Batteriekühlung von Kraftfahrzeugen.

Die gesteigerten Anforderungen an Elektrofahrzeuge bezüglich Reichweite, Fahrleistung und Ladezeit haben zur Folge, dass die thermischen Belastungen der Batterien durch Überhitzung bzw. Alterung zunehmen. Um diese schädlichen Effekte zu reduzieren, wird mittels von Medien durchflossenen Temperierelementen die Betriebstemperatur einer Batterie begrenzt. Bei den Temperierelementen handelt es sich um Wärmeübertragerplatten in Form von Kühlplatten, die oberhalb, seitlich und/oder unterhalb eines Batteriemoduls angeordnet werden.

Wärmeübertragerplatten herkömmlicher Bauart bestehen üblicherweise aus gefügten Aluminiumblechen oder stranggepressten Aluminiumprofilen, die über Anschlussstutzen das Durchströmen der Wärmeübertragerplatten mit Temperiermedium bzw. Kühlfluid ermöglichen. Meist werden die Anschlussstutzen formgebend oder spanabhebend gefertigt und mit dem Plattenkörper einer Kühlplatte verbunden. Die Anschlussstutzen sind so konzipiert, dass sie eine schnelle Montage von Kühlfluidleitungen ermöglichen.

Durch die EP 2 372 761 B1 zählt eine Kühlplatte mit einem aus zwei Plattenelementen gebildeten Plattenkörper zum Stand der Technik, bei der Fluidanschlüsse bzw. Anschlussstutzen für Kühlfluid an einer ebenen Fläche eines Plattenelements parallel zur Fläche des Plattenelements angeordnet sind.

Bei der aus der EP 2 607 832 A1 bekannten Kühlplatte erfolgt die Zuleitung und Ableitung von Kühlfluid über Verbinderstücke, die mit einem Anschlussabschnitt in eine Aufnahme am Plattenelement einsteckbar sind.

Auch bei der in der EP 3 741 876 A1 beschriebenen Batteriekühlplatte ist der Plattenkörper aus zwei Plattenelementen gebildet und weist Anschlussstutzen für Kühlfluid auf, wobei ein Anschlussstutzen parallel zur Ebene der Plattenelemente ausgerichtet und mit einem Anschlussabschnitt in einem Aufnahmeabschnitt des Plattenkörpers gefügt ist.

Die DE 10 2010 051 106 B4 offenbart eine Kühlplatte, die mindestens einen Kühlkanal zur Leitung eines Kühlmittels aufweist, der mit zumindest einem Einlass und zumindest einem Auslass versehen ist. Die Kühlplatte weist zumindest zwei flächig aneinander anliegenden Plattenelemente auf, in denen Ausbuchtungen ausgeformt sind, die miteinander einen Kühlkanal ausbilden. Der Einlass und der Auslass sind jeweils mit einem Anschlussstutzen versehen zur Verbindung des Kühlkanals mit einer Kühlmittelanschlusseinheit.

Der Erfindung liegt ausgehend vom Stand der Technik die Aufgabe zugrunde, eine funktional und herstellungstechnisch verbesserte Wärmeübertragerplatte zu schaffen und eine montagegerechte, prozesssichere und rationelle Fügung eines Anschlussstutzens an dem Plattenkörper einer Wärmeübertragerplatte zu gewährleisten.

Die Lösung dieser Aufgabe besteht in einer Wärmeübertragerplatte gemäß den Merkmalen von Anspruch 1.

Vorteilhafte Ausgestaltungen und Weiterbildungen der Erfindung sind Gegenstand der anhängigen Ansprüche.

Eine Kühlplatte weist einen aus zwei zumindest Plattenelementen gebildeten Plattenkörper und Anschlussstutzen für die Zuleitung und Ableitung eines Kühlfluids auf. Bei den Plattenelementen handelt es sich insbesondere um eine Kanalplatte und eine Bodenplatte, welche zu einem Plattenstapel zusammengeführt und miteinander gefügt den Plattenkörper bilden. Mit dem Plattenkörper sind die Anschlussstutzen gefügt. Zumindest ein Anschlussstutzen besitzt einen Fügeabschnitt, der in einem zwischen den Plattenelementen ausgebildeten Aufnahmeabschnitt des Plattenkörpers gefügt ist. Die Ausrichtung des Fügeabschnitts des Anschlussstutzens ist parallel zur Ebene der Plattenelemente. Außerhalb des Plattenkörpers kann der Anschlussstutzen Bogen- und/oder Krümmungsabschnitte aufweisen. Der außerhalb des Plattenkörpers verlaufende Teil des Anschlussstutzens ist als Koppelabschnitt zum Anschluss einer Anschlussleitung für ein Kühlfluid konfiguriert.

Die Plattenelemente bestehen aus Leichtmetall oder einer Leichtmetalllegierung, insbesondere einer Aluminiumlegierung.

Zumindest ein Plattenelement des Plattenkörpers der Kühlplatte weist eine Kanalstruktur zur Durchleitung eines Kühlfluids auf.

Der Anschlussstutzen ist mit seinem Fügeabschnitt im Aufnahmeabschnitt des Plattenkörpers positioniert und mittels Löten stoffschlüssig gefügt. Auch die zumindest zwei Plattenelemente sind an ihren aneinander liegenden Fügeflächen löttechnisch miteinander gefügt. Der Lötvorgang wird in einem Formlötwerkzeug durchgeführt. Das bedeutet, dass die Fügepartner, also die die Wärmeübertragerplatte bildenden Bauteile, nämlich zumindest die zwei Plattenelemente und der oder die Anschlussstutzen, in dem Formlötwerkzeug eingespannt und aneinander gepresst werden, wobei im Formlötwerkzeug der Anschlussabschnitt des Plattenkörpers durch bereichsweise Umformung von an den Plattenelementen vorgesehenen Formabschnitten ausgeformt wird und im Formlötwerkzeug die Bauteile auf eine Temperatur oberhalb der Schmelztemperatur des verwendeten Lotwerkstoffs aufgeheizt werden, so dass der Lotwerkstoff durch Schmelzen in eine flüssige Phase übergeht und nach dem Erstarren des Lotwerkstoffes eine stoffschlüssige Verbindung der Bauteile entsteht.

Es ist zumindest ein Lotstoppmittel vorgesehen, welches den Lotfluss bei der Herstellung der Lötverbindung begrenzt. Durch das Lotstoppmittel lässt sich der Lotfluss bei der Herstellung der Lötverbindung prozesssicher geometrisch begrenzen. Auch kann das Lotflussmittel so eingerichtet und bestimmt sowie positioniert sein, dass ein Ausblasen des schmelzflüssigen Lotwerkstoffs bei der innendrucktechnischen Umformung des oder der Plattenelemente verhindert wird.

Zur Ausbildung eines oder mehrerer Kanäle in zumindest einem der Plattenelemente werden die Plattenelemente in einem Formlötwerkzeug eingespannt und ein Zwischenraum zwischen den Plattenelementen mit Innendruck beaufschlagt. Hierzu wird ein Wirkmedium in den Zwischenraum geleitet und ein Kanal oder mehrere Kanäle erzeugt. Das Lotstoppmittel ist dafür bestimmt und eingerichtet sowie positioniert, dass ein Ausblasen des in dieser Phase schmelzflüssigen Lotwerkstoffs in Folge des Innendrucks verhindert wird.

Das Lotstoppmittel kann durch ein Dichtmetall gebildet sein, welches eine höhere Schmelztemperatur aufweist als der für die löttechnische Fügung verwendete Lotwerkstoff. Das Lotstoppmittel in Form von Dichtmetall wird unter der Temperatureinwirkung im Formlötwerkzeug plastisch. Unter dem Pressendruck verformt sich das Dichtmetall und dichtet die Spalte zwischen den Plattenelementen und dem Anschlussstutzen bzw. dem Fügeabschnitt des Anschlussstutzens ab, so dass ein Lotfluss gezielt auf den Fügebereich zwischen den Fügepartnern begrenzt werden kann.

Vorzugsweise ist das Lotstoppmittel auf dem Fügeabschnitt des Anschlussstutzens angeordnet. Das Lotstoppmittel kann aber auch stirnseitig innen im Plattenkörper vor dem Fügeabschnitt im Aufnahmeabschnitt des Plattenkörpers vorgesehen sein. Auch kann das Lotstoppmittel stirnseitig im Bereich vor der Öffnung des Aufnahmeabschnitts angeordnet sein.

Vorteilhafte Ausgestaltungen sehen vor, dass das Lotstoppmittel in Längsrichtung des Fügeabschnitts vor und/oder hinter einem auf dem Fügeabschnitt applizierten Lotwerkstoff angeordnet ist.

Das Lotstoppmittel ist geometrisch auf den Fügespalt zwischen Fügeabschnitt und Anschlussstutzen abgestimmt. Das Lotstoppmittel kann insbesondere geometrisch auf die Innenkontor bzw. den Innenquerschnitt des Aufnahmeabschnitts abgestimmt sein. Bei einer vorteilhaften Ausgestaltung weist das Lotstoppmittel in Längsrichtung des Fügeabschnitts verlaufende Längsstege auf, welche an Längskehlen angepasst sind, die sich entlang des Aufnahmeabschnitts des Plattenkörpers in dessen Fügeebene zwischen den beiden gefügten Plattenelementen erstrecken.

Eine weitere Ausgestaltung sieht vor, dass das Lotstoppmittel durch eine stirnseitig am Aufnahmeabschnitt anliegende Ringwulst gebildet ist.

Vorzugsweise ist die Ringwulst werkstoffeinheitlich einstückig aus der Wand des Anschlussstutzens gebildet. Die Ringwulst steht über den Außenumfang des Anschlussstutzens vor und verläuft ringförmig.

Die Ringwulst kann durch einen Stauchvorgang gebildet sein. Insbesondere kann die Ringwulst auch bei der Herstellung des Plattenkörpers im Formlötwerkzeug gebildet sein. Hierzu wird der Anschlussstutzen im Formlötwerkzeug zwischen den Plattenelementen eingespannt und gestaucht.

Die Ringwulst fungiert als Anschlag und bestimmt die Position bzw. die Einschublänge des Anschlussabschnitts im Aufnahmeabschnitt. Des Weiteren wird die Öffnung des Aufnahmeabschnitts durch die Ringwulst abgedichtet bzw. die Dichtheit zwischen dem Fügeabschnitt des Anschlussstutzens und dem Aufnahmeabschnitt verbessert.

Eine für die Praxis besonders vorteilhafte Ausgestaltung sieht vor, dass das Lotstoppmittel durch eine Querschnittsveränderung im Fügeabschnitt des Anschlussstutzens und im Aufnahmeabschnitt ausgebildet ist. Das Lotstoppmittel ist durch die Querschnittsveränderung im Fügebereich zwischen dem in den Formabschnitten der Plattenelemente ausgebildeten Aufnahmeabschnitt und dem Anschlussstutzen ausgebildet. Sowohl der Fügeabschnitt als auch der Aufnahmeabschnitt weisen zwei Längenabschnitte mit voneinander verschiedenen Querschnitten auf. Die Längenabschnitte des Fügeabschnitts, ebenso wie die Längenabschnittes des Aufnahmeabschnitts gehen über einen Übergangsabschnitt ineinander über.

Die Querschnittsveränderung im Fügeabschnitt und im Aufnahmeabschnitt ergänzen einander und es kommt zu einer Querschnittsverringerung des Ringraums zwischen Fügeabschnitt und Aufnahmeabschnitt. Der beim Lötvorgang schmelzflüssige Lotwerkstoff wird in der Querschnittsveränderung zwischen Fügeabschnitt und Aufnahmeabschnitt aufgehalten. Hierdurch wird der Lotfluss bei der Herstellung der Lötverbindung begrenzt.

Es können auch mehrere Lotstoppmittel vorgesehen sein. Weiterhin ist es möglich, dass zwei verschiedene Lotstoppmittel bzw. Arten von Lotstoppmitteln in Kombination eingesetzt werden. So kann ein Lotstoppmittel in Form einer Querschnittsveränderung im Anschlussstutzen, insbesondere im Fügeabschnitt des Anschlussstutzens und einer komplementär dazu ausgestalteten Querschnittsveränderung im Aufnahmeabschnitt vorgesehen sein. Optional in Kombination mit dieser Ausgestaltung des Lotstoppmittels kann ein Lotstoppmittel vorgesehen sein in Form einer mechanischen Lotstoppsperre, insbesondere gebildet durch einen separaten Ringkörper aus einem Lotstoppwerkstoff oder einem im Anschlussstutzen materialeinheitlich einstückig ausgebildeten Lotstoppkörper bzw. -ring.

Der Fügeabschnitt des Anschlussstutzens kann im Querschnitt kreisrund sein.

Eine Alternative sieht vor, dass der Fügeabschnitt im Querschnitt ellipsenförmig ist.

Eine weitere vorteilhafte Ausgestaltung sieht vor, dass der Fügeabschnitt im Querschnitt rechteckig konfiguriert ist, wobei die Ecken des Rechtecks abgerundet sind.

Eine weitere für die Praxis vorteilhafte Ausgestaltung besteht darin, dass der Fügeabschnitt zwei Längenabschnitte aufweist, wobei die beiden Längenabschnitte jeweils einen voneinander verschiedenen Querschnitt besitzen. Ebenso besitzt der Aufnahmeabschnitt zwei Längenabschnitte, welche einen voneinander verschiedenen Querschnitt besitzen. Diese Ausgestaltung ist montage- bzw. herstelltechnisch ebenso wie fügetechnisch vorteilhaft. Am Übergang zwischen den Längenabschnitten mit verschiedenen Querschnitten ist eine Schulter gebildet, welche die Lagefixierung bzw. -orientierung des Fügeabschnitts im Aufnahmeabschnitt verbessert. Weiterhin kann die Schulter eine Ausziehsicherung bilden. Die Schulter bildet ein Widerlager zwischen dem Fügeabschnitt und dem Aufnahmeabschnitt. Insbesondere bei der Beaufschlagung des Plattenkörpers mit Innendruck zur innendrucktechnischen Ausbildung des Kanals stützt sich der Anschlussstutzen am Widerlager ab.

Auch kann durch die Querschnittsveränderung im Fügeabschnitt und im Aufnahmeabschnitt das erfindungsgemäß vorgesehene Lotstoppmittel ausgebildet sein.

Eine weitere Ausgestaltung sieht vor, dass der Anschlussstutzen öffnungsseitig einen Koppelabschnitt zum Anschluss einer Kühlfluidleitung aufweist. Die Öffnungsseite des Anschlussstutzens ist die Seite, über welche die Zu- bzw. Ableitung von Kühlfluid über eine Kühlfluidleitung erfolgt. Der Koppelabschnitt steht bzw. ragt vom Plattenkörper der Kühlplatte frei vor.

Ein Lotstoppmittel kann aus einem Lotwerkstoff gebildet sein. Hierbei werden zwei Lotwerkstoffe mit unterschiedlichen Werkstoffeigenschaften appliziert. Ein Lotwerkstoff erster Art ist der Lotwerkstoff, der auf bzw. um den Fügeabschnitt des Anschlussstutzens appliziert ist, um die stoffschlüssige Verbindung zwischen Fügeabschnitt und Aufnahmeabschnitt zu realisieren. Ein Lotwerkstoff zweiter Art weist eine gegenüber dem Lotwerkstoff erster Art höhere Schmelztemperatur auf und bildet das Lotstoppmittel. Der Lotwerkstoff zweiter Art schmilzt beim Erwärmen des Anschlussstutzens und des Aufnahmeabschnitts im Formlötwerkzeug später bzw. erst bei höheren Temperaturen, so dass sich der Lotwerkstoff zweiter Art zäher als der Lotwerkstoff erster Art und damit dickflüssiger verhält. Auf diese Weise bildet der Lotwerkstoff zweiter Art ein Lotstoppmittel für den Lotwerkstoff erster Art. Das Lotstoppmittel ist insbesondere im Aufnahmeabschnitt um den Fügeabschnitt appliziert. Das Lotstoppmittel in Form eines Lotwerkstoffs zweiter Art kann in Längsrichtung des Fügeabschnitts vor und/oder nach dem Lotwerkstoff erster Art angeordnet sein.

Möglich ist auch, dass Lotstoppmittel andersartig zu realisieren, beispielsweise in Form einer mechanischen Lotstoppsperre, wie beispielsweise einem Lotstoppring.

Erfindungsgemäß weist der Fügeabschnitt zwei nach außen gerichtete Längsstege und der Aufnahmeabschnitt weist sich im Bereich der Fügeebene zwischen den Plattenelementen erstreckende Längskehlen auf, wobei die Längsstege in den Längskehlen verlaufen.

Die Plattenelemente sind unter Eingliederung des Fügeabschnitts des Anschlussstutzens im Aufnahmeabschnitt des Plattenkörpers löttechnisch gefügt. Die Längsstege und die Längskehlen ergänzen einander komplementär. Die Kontur bzw. Konfiguration der Längsstege und der Längskehlen stellt einen technologisch notwendigen Fügespalt sicher. Die Fügeflächen sind optimiert. Der Fügespalt, insbesondere die Breite des Fügespalts, ist über den Umfang bzw. den Verlauf zwischen Fügeabschnitt und Aufnahmeabschnitt vergleichmäßigt ohne Dickensprünge. Die Spaltbreite ist klein. Eine hochfeste, dichte, stoffschlüssige Fügung des Anschlussstutzens mit seinem Fügeabschnitt im Aufnahmeabschnitt des Plattenkörpers wird erreicht.

Der Fügeabschnitt weist zwei konvex gekrümmte Wandabschnitte auf, die sich zwischen den Längsstegen erstrecken. Insbesondere sind die Wandabschnitte elliptisch bzw. ellipsenabschnittsförmig gekrümmt.

Die beiden gekrümmten Wandabschnitte verlaufen spiegelsymmetrisch zu einer Querachse des Fügeabschnitts, insbesondere der Mittellängsachse, und gehen jeweils endseitig in einen Längssteg über. Die Wandabschnitte sind konvex gekrümmt zum Mittelpunkt bzw. der Mittellängsachse des Fügeabschnitts. In den Stegabschnitten sind die Seitenflächen konkav gekrümmt.

Eine Ausgestaltung des Fügeabschnitts sieht vor, dass der Fügeabschnitt des Anschlussstutzens im Querschnitt eine elliptische bzw. ellipsenförmige Außenkontur auf mit auf einer Querachse einander gegenüberliegenden nach außen gerichteten Längsstegen.

Möglich ist es, dass der Fügeabschnitt im Querschnitt abgeflachte obere und untere Wandabschnitte, insbesondere Mittelwandabschnitte, besitzt, welche jeweils endseitig über konvex gekrümmte Wandabschnitte in einen Längssteg übergeben.

Der Aufnahmeabschnitt des Plattenkörpers bildet einen Einsteck- bzw. Fügebereich für den Anschlussabschnitt des Anschlussstutzens.

Der Anschlussstutzen weist im Fügeabschnitt beidseitig sich in Längsrichtung des Anschlussstutzens erstreckende Längsstege auf. Diese sind im Querschnitt dreieckförmig konfiguriert mit konkaven Stegwänden und einer gerundeten Spitze. Die Kontur der Längsstege gewährleistet einen fließenden Übergang von der elliptischen Außenkontur zu den Längsstegen mit gerundeten Außenflächen ohne Stufen oder scharfe Krümmungen bzw. Abwinkelungen.

Die Längskehlen des Aufnahmeabschnitts sind im Querschnitt trichterförmig konfiguriert mit bezogen auf den Mittelpunkt bzw. die Mittellängsachse des Anschlussstutzens und des Aufnahmeabschnitts konkaven Kehlwangen und einem keilförmigen Kehlgrund. Die Innenkontur im Bereich der durch die Kehlwangen gebildeten Innenecke des Aufnahmeabschnitts ist entlang der Kehlwangen gerundet. Der Kehlgrund am Übergang des Aufnahmeabschnitts zu den einander kontaktierenden Plattenelementen ist spitzwinklig.

Die Konfiguration der Längsstege und der Längskehlen sind zueinander komplementär ausgebildet. Die Konturen von Längssteg und Längskehle ergänzen einander derart, dass die Längsstege in die Längskehlen nach Art einer Nut/Feder-Verbindung zusammenwirken, wobei zwischen den Konturen ein Fügespalt ausgebildet ist.

Der Fügeabschnitt weist zwei konvex gekrümmt verlaufende Wandabschnitte auf. Diese erstrecken sich jeweils zwischen den einander gegenüberliegenden Längsstegen und gehen in die konkaven Stegwände über.

Der Aufnahmeabschnitt weist konvex gekrümmt verlaufende Innenwandabschnitte auf, an welche sich die konkaven Kehlwangen anschließen.

Die Angaben "konvex" und "konkav" beziehen sich jeweils auf den Mittelpunkt bzw. die Längsachse des Anschlussstutzens. Eine konvexe Fläche, eine konvexe Wand oder ein konvexer Wandabschnitt ist eine vom Mittelpunkt bzw. der Mittellängsachse des Anschlussstutzens nach außen gewölbte Fläche bzw. Abschnitt.

Eine konkave Fläche, ein konkaver Wandabschnitt oder eine konkave Kehlwange ist ein oder eine in Bezug auf den Mittelpunkt bzw. die Mittellängsachse des Anschlussstutzens nach innen gewölbte oder gekrümmt verlaufende Fläche, Abschnitt oder Wange.

Ein Verfahren zur Herstellung einer Kühlplatte mit einem Anschlussstutzen weist folgende Schritte auf:
- Bereitstellen eines Anschlussstutzens, welcher einen Fügeabschnitt und einen Koppelabschnitt zum Anschluss einer Kühlfluidleitung aufweist;
- Bereitstellen eines ersten Plattenelements und eines zweiten Plattenelements, wobei das erste Plattenelement und das zweite Plattenelement Formabschnitte aufweisen, welche dazu eingerichtet und bestimmt sind, einen Aufnahmeabschnitt für den Fügeabschnitt des Anschlussstutzens zu bilden;
- Einlegen des ersten Plattenelements, des zweiten Plattenelements und des Anschlussstutzens in ein beheiztes Formlötwerkzeug, welches ein Unterwerkzeug und ein Oberwerkzeug aufweist, wobei der Fügeabschnitt des Anschlussstutzens zwischen den Formabschnitten der Plattenelemente positioniert wird und zwischen dem Fügeabschnitt und den Formabschnitten ein Lotwerkstoff und zumindest ein Lotstoppmittel angeordnet wird;
- Schließen des Formlötwerkzeugs und Einklemmen der Plattenelemente und des Fügeabschnitts zwischen dem Unterwerkzeug und dem Oberwerkzeug, wobei die Formabschnitte der Plattenelemente um den Fügeabschnitt des Anschlussstutzens endgeformt werden und ein Aufnahmeabschnitt gebildet wird;
- Aufheizen des Plattenstapels;
- Beaufschlagung eines Zwischenraums zwischen den Plattenelementen des Plattenstapels mit Innendruck durch Einleiten eines Wirkmediums über den Anschlussstutzen in den Zwischenraum und Ausbilden eines Kanals in zumindest einem Plattenelement;
- Schmelzen des Lotwerkstoffs zwischen den Plattenelementen und zwischen dem Fügeabschnitt und dem Aufnahmeabschnitt und löttechnische Fügung;
- Öffnen des Formlötwerkzeugs und Entnahme der Kühlplatte aus dem Form lötwerkzeug.

Die Formabschnitte der Platinenelemente können vorgeformt sein und eine Aufnahmekontur aufweisen, in bzw. zwischen denen der Fügeabschnitt eines Anschlussstutzens aufgenommen wird.

Alternativ oder zusätzlich kann ein Lotstoppmittel auf dem Anschlussstutzen so positioniert sein oder ausgebildet werden, beispielsweise in Form einer Ringwulst, dass das Lotstoppmittel stirnseitig an der Öffnung des Aufnahmeabschnitts anliegt.

Das Verfahren ist verfahrenstechnisch verbessert und ermöglicht in effizienter Weise die Herstellung von qualitativ hochwertigen Wärmeübertragerplatten mit optimierter Anbindung der Anschlussstutzen an diese.

Eine Wärmeübertragerplatte weist mehrere Anschlussstutzen auf, insbesondere weist ein Plattenkörper einen Anschlussstutzen für die Zuführung und einen Anschlussstutzen für die Ableitung eines Kühlfluids auf. Vorzugsweise sind alle Anschlussstutzen des Plattenkörpers und deren Festlegung an bzw. im Plattenkörper zwischen den Plattenelementen erfindungsgemäß ausgeführt.

Das Formlötwerkzeug ist beheizbar und zur Herstellung der Kühlplatten auf eine löttechnisch notwendige Werkzeugtemperatur aufgeheizt.

Ein Plattenstapel ist aus zumindest zwei Plattenelementen aus einem metallischen Werkstoff, insbesondere einem Leichtmetallwerkstoff, gebildet. Zwischen den Plattenelementen ist ein Lotwerkstoff appliziert.

Im Rahmen der Erfindung werden vorzugsweise und effektiv Plattenelemente verwendet, welche mit einem Lotwerkstoff versehen sind, wobei der Lotwerkstoff in Form einer plattierten Lotschicht auf zumindest eines der Plattenelemente aufgebracht ist. Es werden folglich Plattenelemente bereitgestellt, von denen zumindest ein Plattenelement bereits mit einem Lotwerkstoff versehen ist.

Der Lotwerkstoff zur stoffschlüssigen Verbindung von Anschlussstutzen bzw. Fügeabschnitt des Anschlussstutzens und Aufnahmeabschnitt des Plattenkörpers kann auf den Formabschnitten der Plattenelemente und/oder auf dem Fügeabschnitt vorappliziert sein. Der Lotwerkstoff kann auch in Form von Lothülsen, Lotfolien oder Lotwerkstoffringen auf dem Fügeabschnitt des Anschlussstutzens angeordnet werden.

Aus den beiden Plattenelementen wird ein Plattenstapel gebildet. Beim Bilden des Plattenstapels wird der Anschlussstutzen mit seinem Fügeabschnitt zwischen den Plattenelementen positioniert. Hierzu wird der Anschlussabschnitt zwischen Formabschnitten an den Plattenelementen angeordnet.

Der Plattenstapel wird in das Formlötwerkzeug eingelegt und das Formlötwerkzeug geschlossen. Der Plattenstapel kann außerhalb des Formlötwerkzeugs gebildet und in das Formlötwerkzeug gebracht werden. Der Plattenstapel kann auch im Formlötwerkzeug gebildet werden.

Das Formlötwerkzeug weist ein Unterwerkzeug und ein Oberwerkzeug auf. Diese werden bei der Schließbewegung des Warmformwerkzeugs relativ zueinander verlagert, insbesondere wird das Oberwerkzeug auf das Unterwerkzeug abgesenkt. Bei der Schließbewegung wird der Plattenstapel zwischen dem Unterwerkzeug und dem Oberwerkzeug aufgenommen und einklemmt. Der Plattenstapel gelangt dabei in Flächenkontakt zwischen dem Unterwerkzeug und dem Oberwerkzeug und wird im Formlötwerkzeug aufgeheizt. Das Formlötwerkzeug ist auf eine Werkzeugtemperatur aufgeheizt, bei der sowohl der Umformvorgang als auch der löttechnische Fügevorgang durchgeführt wird. Insbesondere beträgt die Werkzeugtemperatur zwischen 540° C und 670° C. Besonders vorteilhaft liegt die Werkzeugtemperatur zwischen 550° C und 640° C.

Beim Schließen des Formlötwerkzeugs werden die Formabschnitte der Plattenelemente um den Fügeabschnitt des Anschlussstutzens endgeformt und der Aufnahmeabschnitt ausgeformt. In der Fügeebene zwischen den Plattenelementen erstrecken sich beidseitig entlang des Aufnahmeabschnitts Längskehlen.

Der Körper aus Lotwerkstoff kann seitliche Längsstege besitzen, die geometrisch an die Form der Längskehlen des Aufnahmeabschnitts angepasst sind. Es kommt folglich ein ringförmiger Körper aus Lotwerkstoff zum Einsatz, welcher in Längsrichtung zwei Längsstege besitzt. Diese sind insbesondere dreiecksförmig konfiguriert und stehen nach außen gerichtet in Richtung der Längskehlen vor. Die Längsstege verlaufen in Längsrichtung des Lotwerkstoffkörpers. Auf diese Weise wird der Raum zwischen dem Fügeabschnitt des Anschlussstutzens und dem Aufnahmeabschnitt durch den Lotwerkstoff verfahrenstechnisch und bauteiltechnisch vorteilhaft ausgefüllt.

Ein Zwischenraum zwischen den Plattenelementen des Plattenstapels wird mit Innendruck beaufschlagt. Ein Zwischenraum ist ein Bereich zwischen den aneinander liegenden Plattenelementen, wobei nicht notwendigerweise ein Spalt zwischen den Plattenelementen im Bereich des Zwischenraums vorhanden sein muss. Die Beaufschlagung des Zwischenraums mit einem Innendruck erfolgt durch Einleiten eines Wirkmediums, insbesondere Stickstoff, in den Zwischenraum. Hierbei wird ein Kanal durch innendrucktechnische Umformung zumindest eines Plattenelementbereichs in eine Kanalkavität in einer oder den Kontaktflächen des Warmformwerkzeugs ausgebildet. Die Zuleitung des Wirkmediums erfolgt über einen der Anschlussstutzen des Plattenstapels.

Das Wirkmedium zur Ausformung des Kanals bzw. der Kanalstruktur im Plattenkörper wird über den Anschlussstutzen bzw. einem der Anschlussstutzen eingeleitet.

Der Lotwerkstoff zwischen den Plattenelementen und den Plattenelementen und dem Anschlussstutzen wird infolge der Werkzeugtemperatur des Formlötwerkzeugs geschmolzen. Die Plattenelemente untereinander ebenso wie der Anschlussstutzen mit den Plattenelementen im Bereich des Aufnahmeabschnitts werden löttechnisch gefügt.

Das Formlötwerkzeug wird nach Abschluss des Formvorgangs und des Lötvorgangs geöffnet, wobei das Unterwerkzeug und das Oberwerkzeug relativ zueinander verlagert und auseinanderbewegt werden. Der gefügte warme Plattenkörper bzw. die Kühlplatte kann nach dem Öffnen des Formlötwerkzeugs aus diesem entnommen werden. Vor der Entnahme kann die Kühlplatte im Warmformwerkzeug gehalten und abgekühlt werden. Die Abkühlung erfolgt vorzugsweise bis unterhalb der Schmelztemperatur des Lotwerkstoffs.

Der Plattenstapel wird bei der Herstellung der Kühlplatten zwischen dem Unterwerkzeug und Oberwerkzeug eingespannt. Bei der innendrucktechnischen Umformung und Ausbildung des Kanals wird der Plattenstapel umlaufend entlang aneinander liegender Randbereiche und/oder benachbart zu der Kanalkavität abgedichtet. Zur Abdichtung oder zur Unterstützung der Abdichtung können optional Druckelemente im Unterwerkzeug und/oder im Oberwerkzeug vorgesehen sein. Solche Druckelemente sind auch im Bereich des Anschlussstutzens vorgesehen. Die Druckelemente können durch eine entsprechende Konturgebung in den Formabschnitten des Unterwerkzeugs und/oder des Oberwerkzeugs ausgebildet sein, beispielsweise durch Abdichtsicken. Die Dichtelemente können umlaufend entlang aneinander liegender Randbereiche von Oberwerkzeug und/oder Unterwerkzeug vorgesehen sein. Die Dichtelemente sind weiterhin so angeordnet, dass der Aufnahmeabschnitt mit dem darin angeordneten Anschlussabschnitt des Anschlussstutzens eingespannt und abgedichtet ist bzw. beim Aufweitvorgang und Lötvorgang eingespannt und abgedichtet wird. Dichtelemente können auch benachbart zu der Kanalkavität vorgesehen sein. Die Dichtelemente gewährleisten einen besonders vorteilhaften Umformvorgang, insbesondere, dass der Umformvorgang im Bereich der Kanalkavität stattfindet sowie im Bereich der Anschlusskontur des Anschlussstutzens. Auf diese Weise ist eine hohe Maßhaltigkeit und Umformgenauigkeit sichergestellt.

Eine Kühlvorrichtung für eine Fahrzeugbatterie weist eine erfindungsgemäße Kühlplatte auf, die nach einem erfindungsgemäßen Verfahren hergestellt ist. Die Kühlvorrichtung umfasst die für eine Kühlung einer Fahrzeugbatterie notwendigen Peripheriekomponenten und Vorrichtungsbauteile wie Kühlfluidleitungen, Vorrats- und Ausgleichsbehälter für Kühlfluid, Kühlfluidversorgungs- und/oder -pumpeinheiten und/oder -rückkühler.

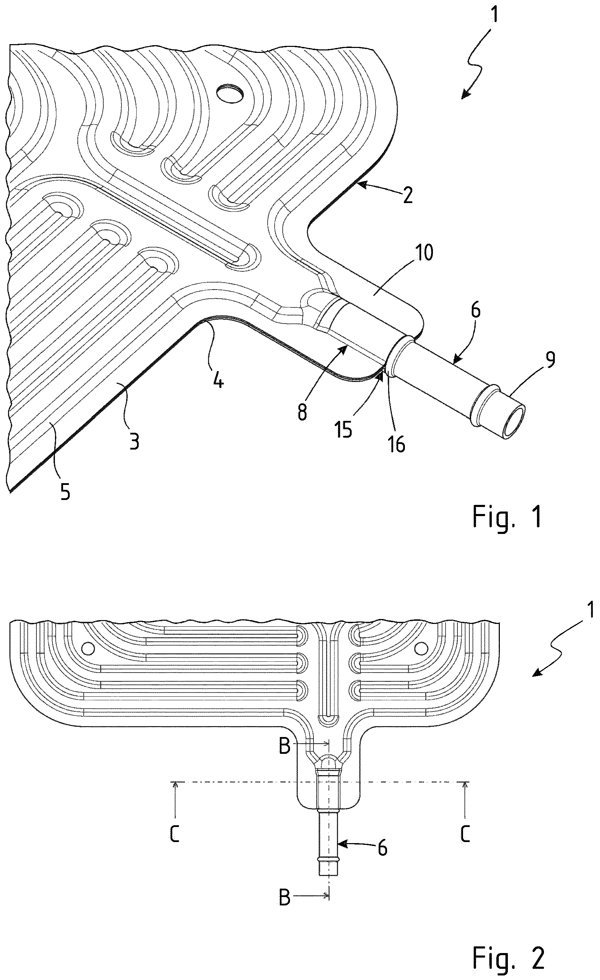

Die Erfindung ist nachfolgend anhand von Zeichnungen näher beschrieben. Es zeigen
- Figur 1: einen Ausschnitt aus einer Kühlplatte in einer perspektivischen Ansicht von oben;
- Figur 2: einen Ausschnitt der Kühlplatte in einer Draufsicht;
- Figur 3: einen Schnitt durch die Kühlplatte gemäß der Darstellung der Figur 2 entlang der Linie B - B;
- Figur 4: einen Schnitt durch die Darstellung der Figur 2 entlang der Linie C - C;
- Figur 5: einen Schnitt durch eine Kühlplatte entlang einer Linie C - C wie in Figur 2 mit der Darstellung einer weiteren Querschnittskonfiguration;
- Figur 6 bis 16: jeweils in einer perspektivischen Darstellung verschiedene Anschlussstutzen und Lotstoppmittel;
- Figur 17: einen Querschnitt durch den Anschlussbereich eines Anschlussstutzens entsprechend der Linie B-B der Figur 2 und
- Figur 18: einen Ausschnitt aus einem Plattenkörper mit der Darstellung einer weiteren Anschlusskonfiguration.

Anhand der Figuren ist eine erfindungsgemäße Kühlplatte 1 sowie Modifikationen des Anschlusses für eine Kühlfluidleitung an eine Kühlplatte 1 erläutert. In den Figuren werden für gleiche und funktionell einander entsprechende Bauteile bzw. Bauteilekomponenten die gleichen Bezugszeichen verwendet.

Eine Kühlplatte 1 dient zur Batteriekühlung, insbesondere für eine Fahrzeugbatterie eines Kraftfahrzeugs.

Die Kühlplatte 1 weist einen Plattenkörper 2 auf, der aus zwei Plattenelementen 3, 4 gebildet ist. Bei dem Plattenelement 3 handelt es sich um eine Kanalplatte, die eine Kanalstruktur mit mindestens einem Kanal 5 aufweist. Bei dem Plattenelement 4 handelt es sich um eine üblicherweise vollständige oder nahezu vollständig ebene Bodenplatte.

Die beiden Plattenelemente 3, 4 sind flächig aufeinander positioniert und bilden den Plattenkörper 2. Die aneinander liegenden Flächen der Plattenelemente 3, 4 sind ganz oder bereichsweise mit einem Lotwerkstoff versehen. Insbesondere ist ein Lotwerkstoff in Form einer plattierten Lotschicht auf einem der Plattenelemente 3, 4 vorappliziert.

Die aneinander liegenden Flächen der Plattenelemente 3, 4 sind ganz oder bereichsweise miteinander gefügt. An dem Plattenkörper 2 ist ein Anschlussstutzen 6 für ein Kühlfluid angeschlossen. Der Anschlussstutzen 6 dient zur Zuleitung oder Ableitung eines Kühlfluids. Üblicherweise ist ein Anschlussstutzen 6 für die Zuleitung eines Kühlfluids vorgesehen, wohingegen über einen weiteren Anschlussstutzen 6 die Ableitung eines Kühlfluids erfolgt.

Der Anschlussstutzen 6 besitzt einen Fügeabschnitt 7, der in einem zwischen den Plattenelementen 3, 4 ausgebildeten Aufnahmeabschnitt 8 des Plattenkörpers 2 gefügt ist.

Der freie Endabschnitt eines Anschlussstutzens 6, welcher gegenüber dem Plattenkörper 2 vorsteht, ist als Koppelabschnitt 9 ausgebildet und dient zum Anschluss einer Kühlfluidleitung, die am Koppelabschnitt 9 festgelegt werden kann.

Zur Herstellung einer Kühlplatte 1 mit zumindest einem Anschlussstutzen 6 wird ein Anschlussstutzen 6 bereitgestellt, welcher einen Fügeabschnitt 7 und einen Koppelabschnitt 9 aufweist. Weiterhin werden ein erstes Plattenelement 3 und ein zweites Plattenelement 4 bereitgestellt. Die beiden Plattenelemente 3, 4 sind eben. Zumindest eines der Plattenelemente 3, 4 ist mit einem Lotwerkstoff versehen. Jedes Plattenelement 3, 4 weist einen vorstehenden Formabschnitt 10 auf. In den Formabschnitt 10 kann eine Aufnahmekontur für den Fügeabschnitt 7 des Anschlussstutzens 6 eingeformt sein. Aus den beiden Plattenelementen 3, 4 wird ein Plattenstapel gebildet, wobei der Fügeabschnitt 7 des Anschlussstutzens 6 zwischen den Formabschnitten 10 und den dort gegebenenfalls vorgesehenen Aufnahmekonturen angeordnet ist. Auf dem Anschlussabschnitt 7 ist ein Lotwerkstoff 11 appliziert.

Die Plattenelemente 3, 4 werden in einem beheizten Formlötwerkzeug angeordnet. Hierzu kann ein Plattenstapel aus den beiden Plattenelementen 3, 4 und dem Anschlussstutzen 6 außerhalb des Formlötwerkzeugs gebildet werden. Der Plattenstapel kann auch im Formlötwerkzeug gebildet werden.

Die Plattenelemente 3, 4 und der Anschlussstutzen 6 mit dem positionierten Fügeabschnitt werden in das beheizte Formlötwerkzeug eingelegt. Der Fügeabschnitt 7 des Anschlussstutzens 6 ist zwischen den Formabschnitten 10 der Plattenelemente 3, 4 angeordnet. Das Formlötwerkzeug weist ein Unterwerkzeug und ein Oberwerkzeug auf. Durch Schließen des Formlötwerkzeugs wird der Plattenstapel zwischen dem Oberwerkzeug und dem Unterwerkzeug eingeklemmt und auf Löttemperatur erwärmt. Der Plattenstapel liegt mit seiner Unterseite in Flächenkontakt mit dem Unterwerkzeug und mit seiner Oberseite in Flächenkontakt mit dem Oberwerkzeug.

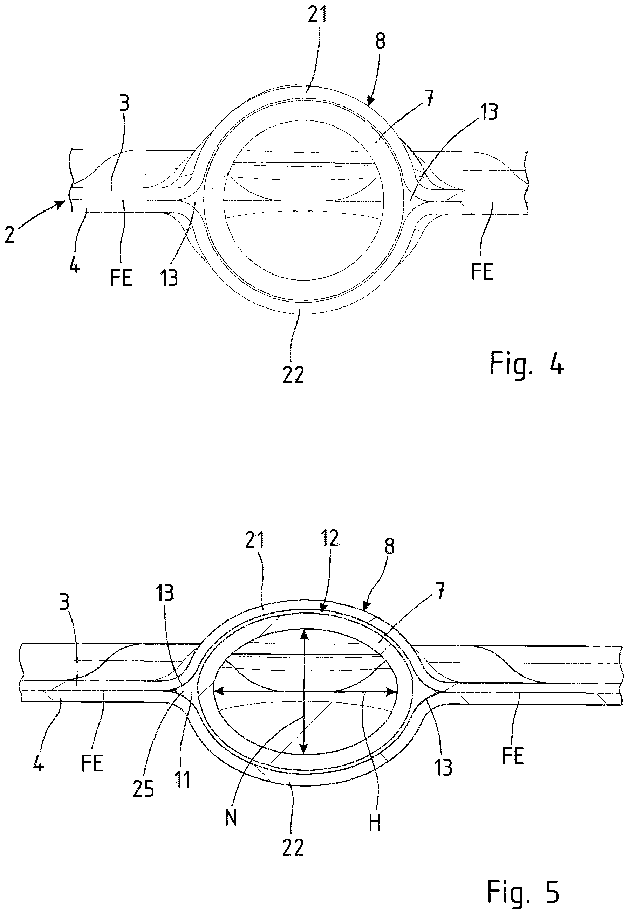

Beim Schließen des Formlötwerkzeugs werden die Formabschnitte 10 endgeformt. Insbesondere werden die Formabschnitte 10 und die dort gegebenenfalls vorgesehenen Aufnahmekonturen an die Außenkontur des Fügeabschnitts 7 geformt. Hierbei bildet sich ein Fügespalt 12 aus, in welchem der Lotwerkstoff 11 aufgenommen und verpresst wird. Die umgeformten Formabschnitte 10 ergänzen sich zum Aufnahmeabschnitt 8. Im Bereich der Fügeebene FE zwischen den Plattenelementen 3, 4 erstrecken sich Längskehlen 13 (siehe hierzu Figuren 4 und 5).

Bei geschlossenem Formlötwerkzeug wird der zwischen dem Unterwerkzeug und dem Oberwerkzeug eingespannte Plattenstapel aufgeheizt. Ein Zwischenraum zwischen den Plattenelementen 3, 4 wird mit Innendruck beaufschlagt. Dies erfolgt durch Einleiten eines Wirkmediums, in der Regel Stickstoff, in einen Zwischenraum zwischen den Plattenelementen 3, 4. Hierdurch wird der Kanal 5 durch innendrucktechnische Umformung ausgebildet. Bei der Kanalausformung wird ein Plattenelementbereich des oberen Plattenelements 3, welches die Kanalplatte bildet, in eine Kanalkavität im Oberwerkzeug geformt. Kanalabschnitte des Kanals 5 verlaufen schleifenförmig ineinander und kommunizieren zwischen dem hier darstellten Anschlussstutzen 6 und einem weiteren, nicht dargestellten Anschlussstutzen.

Der zwischen den Plattenelementen 3, 4 applizierte Lotwerkstoff und der Lotwerkstoff 11, der zwischen dem Aufnahmeabschnitt 8 und dem Fügeabschnitt 7 appliziert ist, wird unter der Temperatureinwirkung im Formlötwerkzeug schmelzflüssig. Das schmelzflüssige Lot benetzt die den Fügespalt 12 begrenzenden Flächen von Fügeabschnitt 7 und Aufnahmeabschnitt 8. Nach dem Abkühlen und Erstarren des Lotwerkstoffs ist eine stoffschlüssige löttechnische Fügung zwischen den Bauteilen hergestellt. Nach dem Ausformen der Kanalstruktur mit dem Kanal 5 und Abschluss des Lötvorgangs wird das Formlötwerkzeug geöffnet und die abgekühlte Platte 1 aus dem Formlötwerkzeug entnommen.

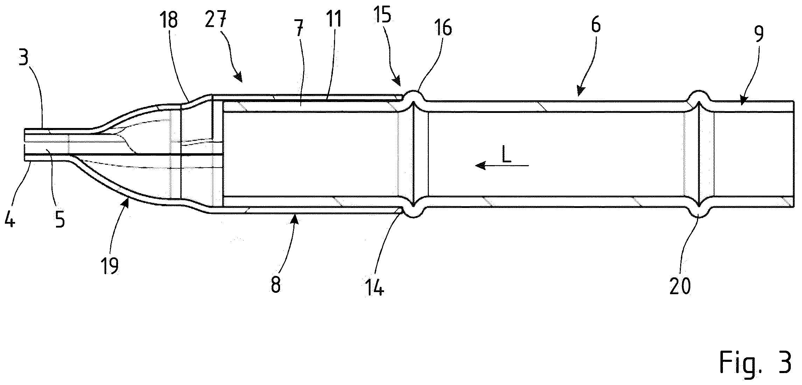

Der Anschlussstutzen 6, wie in der Figur 3 dargestellt, weist einen im Querschnitt kreisrunden Fügeabschnitt 7 auf (siehe hierzu auch Figur 4). Stirnseitig vor der Öffnung 14 des Aufnahmeabschnitts 8 ist ein Lotstoppmittel 15 vorgesehen. Das Lotstoppmittel 15 ist durch eine Ringwulst 16 gebildet, die werkstoffeinheitlich einstückig aus der Wand 17 des Anschlussstutzens 6 gebildet ist. Die Ringwulst 16 liegt bzw. stößt stirnseitig am Aufnahmeabschnitt 8 stirnseitig umlaufend um die Öffnung 14 an.

Der Fügeabschnitt 7 erstreckt sich in Längsrichtung L im Aufnahmeabschnitt 8. Auf der von der Öffnung 14 abgewandten Seite verjüngt sich der Aufnahmeabschnitt 8 über einen Schulterbereich 18 und eine Trichterkontur 19 und geht in den zwischen den Plattenelementen 3, 4 ausgebildeten Kanal 5 über. Diese Ausgestaltung unterstützt laminare Strömungsverhältnisse bei der Zu- und/oder Ableitung eines Kühlfluids.

Der Koppelabschnitt 9 ist im Querschnitt kreisrund.

Im Koppelabschnitt 9 ist ein Widerlagerkörper in Form einer Ringwulst 20 ausgebildet. Die Ringwulst 20 ist aus der Wand 17 des Anschlussstutzens 6 bzw. des Koppelabschnitts 9 ausgeformt. Eine Kühlfluidleitung, insbesondere ein Kühlfluidschlauch, kann auf den Koppelabschnitt 9 und die dort integrierte Ringwulst 20 aufgeschoben werden und mittels eines geeigneten Befestigungsmittels, beispielsweise einer Federklemme, fixiert werden.

Der Fügeabschnitt 7 des Anschlussstutzens 6 kann im Querschnitt kreisrund sein. Dies zeigt die Darstellung der Figur 4. Der umlaufende Fügespalt 12 ebenso wie die Längskehlen 13 am Übergang zu den in der Fügeebene FE aneinander liegenden Plattenelementen 3, 4 ist nach der löttechnischen Fügung mit Lotwerkstoff 11 ausgefüllt.

Die den Aufnahmeabschnitt 8 bildenden oberen und unteren Formabschnitte 10 verlaufen der Außenkontur des Fügeabschnitts 7 komplementär kreisbogenabschnittsförmig gekrümmt. Der obere Wandabschnitt 21 und der untere Wandabschnitt 22 des Aufnahmeabschnitts 8 sind halbkreisförmig geformt.

Eine alternative Querschnittskonfiguration des Fügeabschnitts 7 und des Aufnahmeabschnitts 8 zeigt die Figur 5. Der Fügeabschnitt 7 ist im Querschnitt ellipsenförmig konfiguriert. Der Fügeabschnitt 7 weist im Querschnitt eine Hauptachse H sowie eine senkrecht darauf stehende Nebenachse N auf. Die Hauptachse H entspricht der Mittelquerachse und beschreibt die größte Abmessung des Fügeabschnitts 7. Die Hauptachse H erstreckt sich in der Fügeebene FE der Plattenelemente 3, 4. Die Nebenachse N ist die kleinste Abmessung des Fügeabschnitts 7 in radialer Richtung nach außen. Komplementär zu der ellipsenförmigen Querschnittskonfiguration des Fügeabschnitts 7 sind der obere Wandabschnitt 21 und der untere Wandabschnitt 22 des Aufnahmeabschnitts 8 konfiguriert.

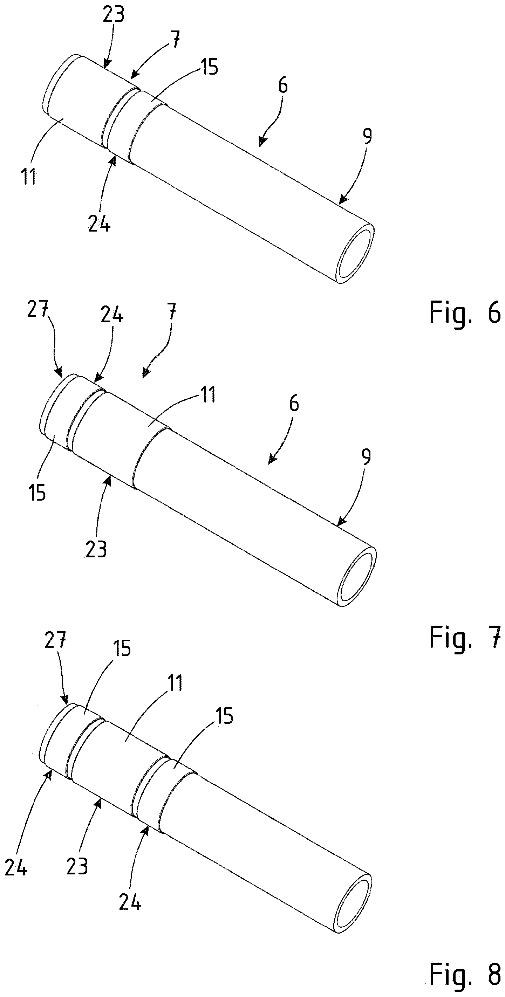

Die Darstellungen der Figuren 6 bis 9 zeigen Ausführungsformen eines Anschlussstutzens 6 mit einem Fügeabschnitt 7 und einem Koppelabschnitt 9. Auf dem Fügeabschnitt 7 ist ein Ringkörper 23 aus Lotwerkstoff 11 appliziert.

Bei der Ausführungsform gemäß der Darstellung von Figur 6 ist in Längsrichtung L des Anschlussstutzens 6 vor dem Lotwerkstoff 11 ein Lotstoppmittel 15 angeordnet. Das Lotstoppmittel 15 ist durch einen Ringkörper 24 aus einem Dichtmetall ausgebildet. Das Dichtmetall weist eine höhere Schmelztemperatur auf als der für die löttechnische Fügung verwendete Lotwerkstoff 11. Unter der Temperatureinwirkung im Formlötwerkzeug wird das Dichtmetall plastisch und verformt sich in Folge des Drucks durch das Formlötwerkzeug. Das Dichtmetall dichtet den Bereich zwischen dem Lotwerkstoff 11 und der Öffnung 14 des Aufnahmeabschnitts ab. Auf diese Weise wird der Lotfluss gezielt auf den Fügebereich zwischen den Fügepartnern begrenzt. Auch kann ein Ausblasen des im Formlötwerkzeug schmelzflüssigen Lotwerkstoffs durch den zur Ausbildung des Kanals 5 aufgebrachten Innendruck verhindert werden.

Bei der in der Figur 7 dargestellten Ausführungsvariante ist das Lotstoppmittel 15 ebenfalls durch einen Ringkörper 24 aus einem Dichtmetall gebildet. Dieser ist in Längsrichtung L des Anschlussstutzens 6 vor dem Lotwerkstoff 11 appliziert.

Die Ausführungsform gemäß der Figur 8 sieht vor, dass ein Lotstoppmittel 15 in Form eines Ringkörpers 24 vor dem Ringkörper 23 aus Lotwerkstoff 11 und ein Lotstoppmittel 15 gebildet durch einen Ringkörper 24 aus Dichtmetall hinter dem Lotwerkstoff 11 angeordnet ist.

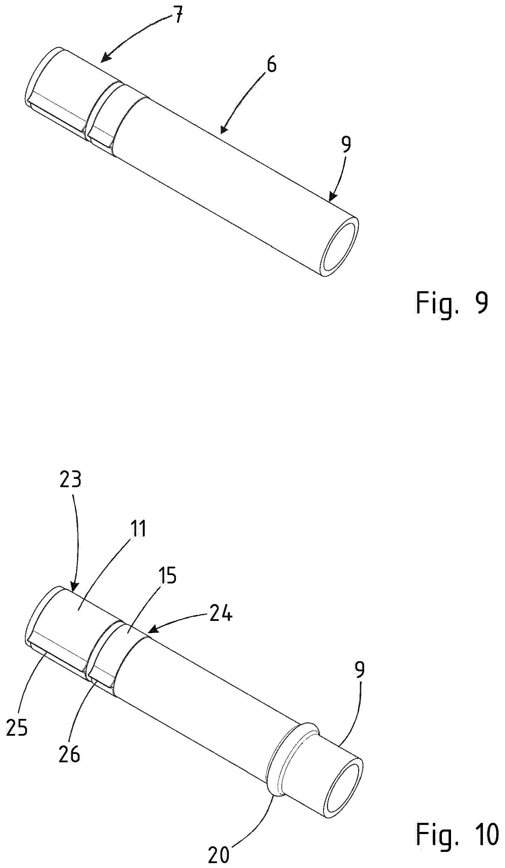

Bei dem Anschlussstutzen 6, wie in der Figur 9 dargestellt, und dem dort auf dem Fügeabschnitt 7 applizierten Lotwerkstoff 11 und dem Lotstoppmittel 15 sind sowohl der Ringkörper 23 aus Lotwerkstoff 11 als auch der Ringkörper 24 aus Dichtmetall konfigurativ an die Kontur eines Fügespalts 11 und der Innenkontur des Aufnahmeabschnitts 8 angepasst. Der Ringkörper 23 aus Lotwerkstoff 11 und der Ringkörper 24 aus Dichtmetall weisen seitliche Längsstege 25, 26 auf. Die Längsstege 25, 26 sind geometrisch an die Innenkontur des Längskehlen 13 des Aufnahmeabschnitts 8 angepasst. Die Längsstege 25, 26 sind im Querschnitt etwa dreiecksförmig konfiguriert und stehen nach außen in Richtung der Längskehlen 13 vor.

Eine Konfiguration eines Anschlussstutzens 6 mit einem Ringkörper 23 aus Lotwerkstoff 11 und Lotstoppmittel 15 in Form eines Ringkörpers 24 aus Dichtmetall sowie Längsstegen 25, 26 zeigt auch die Darstellung des Anschlussstutzens 6 in der Figur 10. Der Anschlussstutzen 6 weist einen Koppelabschnitt 9 mit einem Widerlagerkörper in Form einer Ringwulst 20 auf.

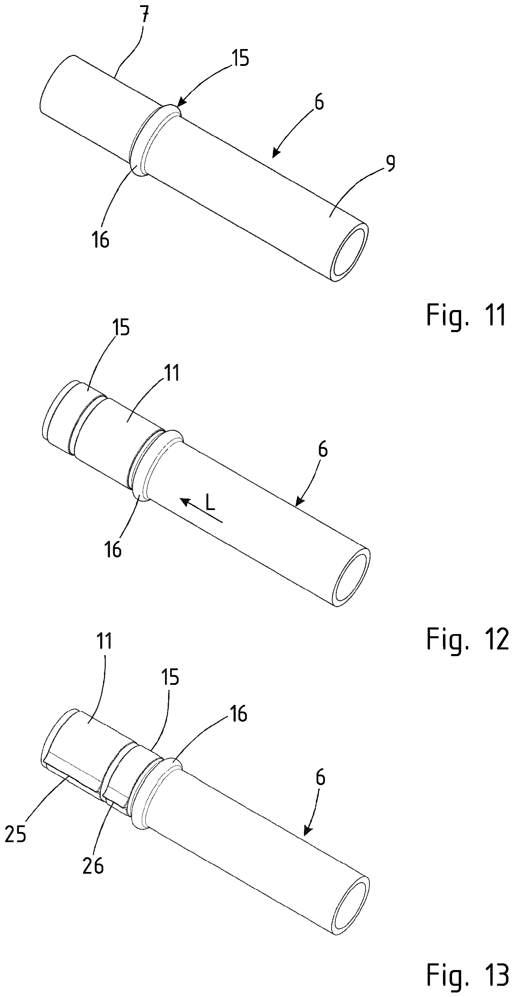

Die Darstellungen der Figuren 11 bis 13 illustrieren wiederum einen Anschlussstutzen 6 mit einem Fügeabschnitt 7 und einem Koppelabschnitt 9. In Längsrichtung ist dem Fügeabschnitt 7 ein Lotstoppmittel 15 in Form einer umlaufenden Ringwulst 16 vorgelagert. Auf dem Fügeabschnitt 7 ist ein Ringkörper 23 aus einem Lotwerkstoff 11 sowie ein Ringkörper 24 aus einem Dichtmetall als Lotstoppmittel 15 appliziert. Bei dem Anschlussstutzen 6 gemäß der Darstellung der Figur 12 ist das Lotstoppmittel 15 in Längsrichtung L auf der zum Plattenkörper 2 gerichteten Seite 27 des Anschlussstutzens 6 hinter dem Lotwerkstoff 11 appliziert.

Bei der Ausführung des Anschlussstutzens 6, wie in der Figur 13 dargestellt, ist das Lotstoppmittel 15 in Längsrichtung L vor dem Lötwerkstoff 11 appliziert. Sowohl das Lotstoppmittel 15 als auch der Lotwerkstoff 11 weisen Längsstege 25, 26 auf.

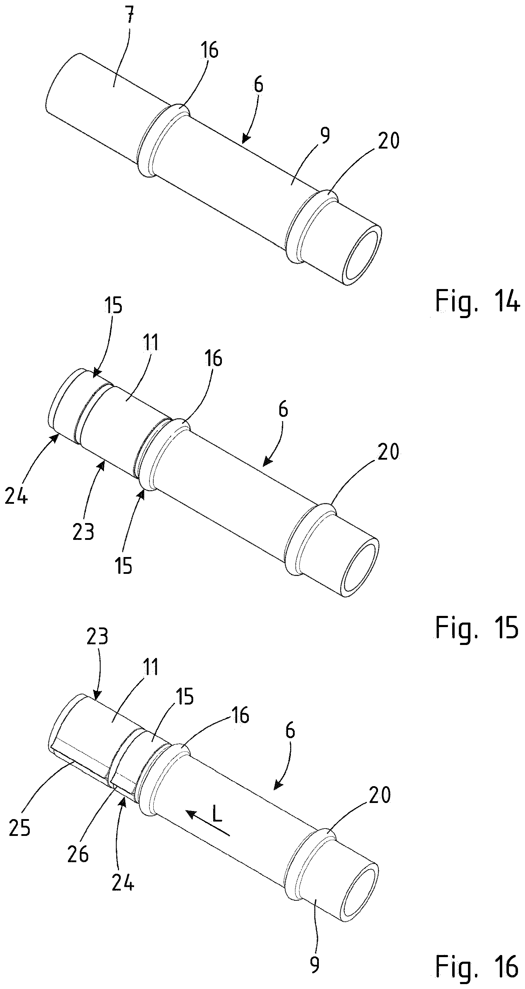

Die Darstellung des Anschlussstutzens 6 entsprechend den Figuren 14 bis 16 entsprechen den vorstehenden Erläuterungen, wobei dort im Koppelabschnitt 9 ein Widerlager in Form einer umlaufenden Ringwulst 20 vorgesehen ist.

Das Lotstoppmittel 15 sowohl in der Ausgestaltung als Ringwulst 16 als auch in der Ausgestaltung als Ringkörper 24 aus Dichtmetall ist dafür eingerichtet und bestimmt sowie positioniert, dass der Lotfluss bei der Herstellung der Lötverbindung zwischen Fügeabschnitt 7 und Aufnahmeabschnitt 8 begrenzt wird. Dies ist durch das Lotstoppmittel 15 prozesssicher möglich. Weiterhin wird ein Ausblasen des im Formlötwerkzeug schmelzflüssigen Lotwerkstoffs 11 aus dem Fügespalt 12 unterbunden.

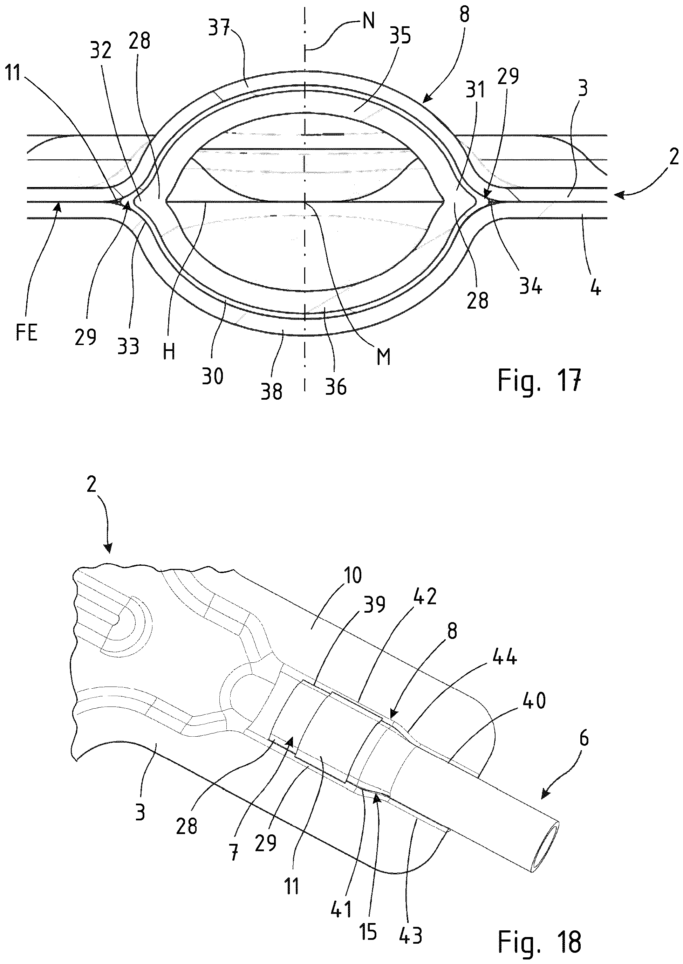

Bei der anhand der Figur 17 erläuterten Anschlusskonfiguration ist der Plattenkörper 2 einer Wärmeübertragerplatte 1, wie zuvor beschrieben, aus zwei Plattenelementen 3, 4 gebildet. Der Anschlussstutzen 6 besitzt einen Fügeabschnitt 7, der in einem zwischen den Plattenelementen 3, 4 ausgebildeten Aufnahmeabschnitt 8 des Plattenkörpers 2 gefügt ist.

Der Fügeabschnitt 7 des Anschlussstutzens 6 weist im Querschnitt eine Hauptachse H sowie eine senkrecht darauf stehende Nebenachse N auf. Die Hauptachse H entspricht der Mittelquerachse und beschreibt die größte Abmessung des Fügeabschnitts 7. Die Hauptachse H erstreckt sich in der Fügeebene FE der Plattenelemente 3, 4. Die Nebenachse N ist die kleinste Abmessung des Anschlussabschnitts 7 in radialer Richtung nach außen.

Der Fügeabschnitt 7 weist zwei nach außen gerichtete Längsstege 28 auf. Die Längsstege 28 liegen auf der Hauptachse H des Anschlussstutzens 6 einander gegenüber. Die Längsstege 28 sind materialeinheitlich einstückiger Bestandteil des Fügeabschnitts 7 und vom Inneren des Anschlussstutzens 6 nach außen gerichtet.

Der Fügeabschnitt 7 des Anschlussstutzens 6 liegt im Aufnahmeabschnitt 8 des Plattenkörpers 2 und ist mit diesem stoffschlüssig gefügt. Der Aufnahmeabschnitt 8 weist sich im Bereich der Fügeebene FE zwischen den Plattenelementen 3, 4 erstreckende Längskehlen 29 auf. Die Längsstege 28 des Fügeabschnitts 7 verlaufen in Längsrichtung L des Aufnahmeabschnitts 8 in den Längskehlen 29.

Die Längsstege 28 und die Längskehle 29 sind zueinander komplementär ausgebildet. Das bedeutet, dass die Kontur der Längskehlen 29 und die Kontur der Längsstege 28 sich unter Ausbildung eines Fügespalts 30 ergänzen. Die Längsstege 28 und die Längskehlen 29 wirken Nut-/Feder-artig zusammen.

Die Längsstege 28 sind im Querschnitt dreieckförmig konfiguriert und weisen Stegwände 31 auf, die konkav gekrümmt verlaufen und in einer gerundeten Spitze 32 enden.

Die Längskehlen 29 sind im Querschnitt trichterförmig konfiguriert mit konkaven Kehlwangen 33 und einem keilförmigen Kehlgrund 34.

Die Angaben konvex und konkav beziehen sich jeweils auf den Mittelpunkt M des Anschlussstutzens 6.

Der Fügeabschnitt 7 weist einen konvex gekrümmt verlaufenden oberen Wandabschnitt 35 und einen konvex gekrümmt verlaufenden unteren Wandabschnitt 36 auf. Jeweils beidseitig schließen sich an die Wandabschnitte 35, 36 die Längsstege 28 an. Die Wandabschnitte 35, 36 gehen in die Stegwände 31 der Längsstege 28 über.

Der Aufnahmeabschnitt 8 weist konvex gekrümmte verlaufende Aufnahmewandabschnitte 37, 38 auf, die jeweils in eine Kehlwange 33 übergehen.

Der Fügeabschnitt 7 ist im Aufnahmeabschnitt 8 durch einen im Fügespalt 30 applizierten Lotwerkstoff 11 stoffschlüssig gefügt. Bei der formlöttechnischen Verbindung der Plattenelemente 3, 4 und des Fügeabschnitts 7 wird der Lotwerkstoff 11 aufgeschmolzen, der Fügespalt 30 vollflächig mit Lotwerkstoff 11 benetzt und ausgefüllt und die Bauteile stoffschlüssig gefügt.

Die Querschnittskontur des Fügeabschnitts 7 kann als Zitronenform beschrieben werden, wobei sich die Querschnittsangabe auf einen Längsschnitt durch eine Zitrone bezieht.

Die Außenkontur des Fügeabschnitts 7 und die Innenkontur des Aufnahmeabschnitts 8 sind komplementär zueinander gestaltet unter Ausbildung des Fügespalts 30.

Die Figur 18 zeigt einen Ausschnitt aus einem Plattenkörper 2 mit einer Ansicht auf ein Plattenelement 3 und dem im Formabschnitt 10 ausgebildeten Teil des Aufnahmeabschnitts 8. Der Fügeabschnitt 7 des Anschlussstutzens 6 ist im Aufnahmeabschnitt 8 positioniert. Der Fügeabschnitt 7 weist einen vorderen plattenkörperseitigen Längenabschnitt 39 und einen hinteren Längenabschnitt 40 auf. Der vordere Längenabschnitt 39 des Fügeabschnitts 7 ist im Querschnitt zitronenförmig konfiguriert und weist seitliche Längsstege 28 auf. Bezüglich der Querschnittskonfiguration des vorderen Längenabschnitts 39 des Fügeabschnitts 7 wird auf die vorstehenden Ausführungen zur Darstellung der Figur 17 verwiesen. Der vordere Längenabschnitt 39 besitzt die zitronenförmige Querschnittskonfiguration mit seitlichen Längsstegen 28 und den dazwischen konvex gekrümmt verlaufenden oberen Wandabschnitten und unteren Wandabschnitten.

Der vordere Längenabschnitt 39 des Fügeabschnitts 7 verjüngt sich über einen Übergangsabschnitt 41 in den hinteren Längenabschnitt 40. Im hinteren Längenabschnitt 40 ist der Fügeabschnitt 7 kreisrund.

Auch der Aufnahmeabschnitt 8 weist zwei Längenabschnitte 42, 43 mit unterschiedlichen Querschnitten auf. Der plattenkörperseitige vordere Längenabschnitt 43 des Aufnahmeabschnitts 8 weist sich im Bereich der Fügeebene FE zwischen den Plattenelemente 3, 4 erstreckende Längskehlen 29 auf. Über einen Übergangsabschnitt 44 geht der vordere Längenabschnitt 43 in den hinteren Längenabschnitt 44 über, der an die kreisrunde Kontur des Längenabschnitts 40 angepasst ist.

Der vordere Längenabschnitt 39 des Fügeabschnitt 7 ist gegenüber dem kreisrunden hinteren Längenabschnitt 40 aufgeweitet und in der Fügeebene FE der Plattenelemente 3, 4 gesehen, verbreitert. Die Querschnittsveränderung im Anschlussstutzen 6 am Übergangsabschnitt 41 und die Querschnittsveränderung im Aufnahmeabschnitt 8 am Übergangsabschnitt 44 ergänzen einander und bilden ein Lotstoppmittel 15. Zudem bildet der schulterartige Übergang und die Verjüngung in den Übergangsabschnitten 41 und 44 ein Widerlager zwischen dem Anschlussstutzen 6 bzw. dem Fügeabschnitt 7 und dem Aufnahmeabschnitt 8. Dieses fungiert als Auszieh- und Ausdrücksicherung, an welchem sich der Anschlussstutzen 6 bei der innendrucktechnischen Ausbildung der Kanalstruktur abstützt. Gleichzeitig wird der Fügespalt im Übergang reduziert und der Lotfluss begrenzt.

Auf dem Fügeabschnitt 7 ist ein Lotwerkstoff 11 aufgebracht. Die Querschnittsveränderung im Fügeabschnitt 7 und im Aufnahmeabschnitt 8 bildet ein Lotstoppmittel 15. Das durch die Querschnittsveränderung ausgebildete Lotstoppmittel 15 begrenzt den Lotfluss bei der Herstellung der Lötverbindung zwischen dem Anschlussstutzen 6 bzw. dem Fügeabschnitt 7 und dem Aufnahmeabschnitt 8.

### Bezugszeichen:

1 - Kühlplatte
2 - Plattenkörper
3 - Plattenelement
4 - Plattenelement
5 - Kanal
6 - Anschlussstutzen
7 - Fügeabschnitt
8 - Aufnahmeabschnitt
9 - Koppelabschnitt
10 - Formabschnitt
11 - Lotwerkstoff
12 - Fügespalt
13 - Längskehle
14 - Öffnung
15 - Lotstoppmittel
16 - Ringwulst
17 - Wand von 6
18 - Schulterbereich
19 - Trichterkontur
20 - Ringwulst
21 - Wandabschnitt v. 8
22 - Wandabschnitt v. 8
23 - Ringkörper
24 - Ringkörper
25 - Längssteg v. 11
26 - Längssteg v. 23
27 - Seite v. 6
28 - Längssteg
29 - Längskehle
30 - Fügespalt
31 - Stegwand
32 - Spitze
33 - Kehlwange
34 - Kehlgrund
35 - Wandabschnitt
36 - Wandabschnitt
37 - Aufnahmewandabschnitt
38 - Aufnahmewandabschnitt
39 - Längenabschnitt
40 - Längenabschnitt
41 - Übergangsabschnitt
42 - Längenabschnitt
43 - Längenabschnitt
44 - Übergangsabschnitt
H - Hauptachse
N - Nebenachse
FE - Fügeebene
L - Längsrichtung

## Patentansprüche

1. Wärmeübertragerplatte, welche einen aus mindestens zwei Plattenelementen (3, 4) gebildeten Plattenkörper (2) und mindestens einen Anschlussstutzen (6) für ein Kühlfluid aufweist, die löttechnisch miteinander gefügt sind, wobei der Anschlussstutzen (6) einen Fügeabschnitt (7) besitzt, der in einem zwischen den Plattenelementen (3, 4) ausgebildeten Aufnahmeabschnitt (8) des Plattenkörpers (2) gefügt ist, wobei ein Lotstoppmittel (15) vorgesehen ist, welches den Lotfluss bei der Herstellung der Lötverbindung begrenzt, **dadurch gekennzeichnet, dass** der Fügeabschnitt (7) zwei nach außen gerichtete Längsstege (28) aufweist und der Aufnahmeabschnitt (8) zwei sich im Bereich der Fügeebene (FE) zwischen den Plattenelemente (3, 4) erstreckende Längskehlen (29) aufweist, wobei die Längsstege (28) in den Längskehlen (29) verlaufen.

2. Wärmeübertragerplatte nach Anspruch 1, **dadurch gekennzeichnet, dass** das Lotstoppmittel (15) durch ein Dichtmetall gebildet ist, welches eine höhere Schmelztemperatur aufweist als der verwendete Lotwerkstoff (11).

3. Wärmeübertragerplatte nach Anspruch 1 oder 2, **dadurch gekennzeichnet, dass** das Lotstoppmittel (15) auf dem Fügeabschnitt (7) des Anschlussstutzens (6) angeordnet ist.

4. Wärmeübertragerplatte nach Anspruch 3, **dadurch gekennzeichnet, dass** das Lotstoppmittel (15) in Längsrichtung (L) des Fügeabschnitts (7) vor und/oder hinter einem auf dem Fügeabschnitt (7) applizierten Lotwerkstoff (11) angeordnet ist.

5. Wärmeübertragerplatte nach einem der Ansprüche 1 bis 4, **dadurch gekennzeichnet, dass** das Lotstoppmittel (15) durch eine stirnseitig am Aufnahmeabschnitt (8) anliegende Ringwulst (16) gebildet ist.

6. Wärmeübertragerplatte nach Anspruch 5, **dadurch gekennzeichnet, dass** die Ringwulst (16) werkstoffeinheitlich einstückig aus der Wand (17) des Anschlussstutzens (6) gebildet ist.

7. Wärmeübertragerplatte nach Anspruch 1, **dadurch gekennzeichnet, dass** das Lotstoppmittel (15) durch eine Querschnittsveränderung im Fügeabschnitt (7) und im Aufnahmeabschnitt (8) ausgebildet ist.

8. Wärmeübertragerplatte nach einem der Ansprüche 1 bis 7, **dadurch gekennzeichnet, dass** der Fügeabschnitt (7) im Querschnitt kreisrund ist.

9. Wärmeübertragerplatte nach einem der Ansprüche 1 bis 7, **dadurch gekennzeichnet, dass** der Fügeabschnitt (7) im Querschnitt ellipsenförmig ist.

10. Wärmeübertragerplatte nach einem der Ansprüche 1 bis 7, **dadurch gekennzeichnet, dass** der Fügeabschnitt im Querschnitt rechteckig konfiguriert ist mit abgerundeten Ecken.

11. Wärmeübertragerplatte nach einem der Ansprüche 1 bis 10, **dadurch gekennzeichnet, dass** der Fügeabschnitt (7) und der Aufnahmeabschnitt (8) jeweils zwei Längenabschnitte (39, 40; 42, 43) mit voneinander verschiedenen Querschnitten aufweist.

12. Wärmeübertragerplatte nach einem der Ansprüche 1 bis 11, **dadurch gekennzeichnet, dass** der Anschlussstutzen (6) öffnungsseitig einen Koppelabschnitt (9) zum Anschluss einer Kühlfluidleitung aufweist.

13. Wärmeübertragerplatte nach Anspruch 12, **dadurch gekennzeichnet, dass** im Koppelabschnitt (9) ein Widerlagerkörper in Form einer Ringwulst (20) ausgebildet ist.

## Claims

1. Heat exchanger plate, which has a plate body (2) formed from at least two plate elements (3, 4) and at least one connection piece (6) for a cooling fluid, which are joined together by soldering, wherein the connecting piece (6) has a joining section (7) which is joined in a receiving section (8) of the plate body (2) formed between the plate elements (3, 4), wherein a solder resist means (15) is provided which limits the solder flow when producing the solder connection,
**characterized in that** the joining section (7) has two outwardly directed longitudinal webs (28) and the receiving section (8) has two longitudinal grooves (29) extending in the region of the joining plane (FE) between the plate elements (3, 4), wherein the longitudinal webs (28) run in the longitudinal grooves (29).

2. Heat exchanger plate according to claim 1, **characterized in that** the solder resist means (15) is formed by a sealing metal which has a higher melting temperature than the solder material (11) used.

3. Heat exchanger plate according to claim 1 or 2, **characterized in that** the solder resist means (15) is arranged on the joining section (7) of the connecting piece (6).

4. Heat exchanger plate according to claim 3, **characterized in that** the solder resist means (15) is arranged in the longitudinal direction (L) of the joining section (7) in front of and/or behind a solder material (11), applied to the joining section (7).

5. Heat exchanger plate according to any one of claims 1 to 4, **characterized in that** the solder resist means (15) is formed by an annular bead (16) resting on the front side of the receiving portion (8).

6. Heat exchanger plate according to claim 5, **characterized in that** the annular bead (16) is formed in one piece from the wall (17) of the connecting piece (6) using a uniform material.

7. Heat exchanger plate according to claim 1, **characterized in that** the solder resist means (15) is formed by a cross-sectional change in the joining section (7) and in the receiving section (8).

8. Heat exchanger plate according to any one of claims 1 to 7, **characterized in that** the joining section (7) is circular in cross-section.

9. Heat exchanger plate according to any one of claims 1 to 7, **characterized in that** the joining section (7) is elliptical in cross-section.

10. Heat exchanger plate according to any one of claims 1 to 7, **characterized in that** the joining section is configured rectangular in cross-section with rounded corners.

11. Heat exchanger plate according to any one of claims 1 to 10, **characterized in that** the joining section (7) and the receiving section (8) each have two longitudinal sections (39, 40; 42, 43) with different cross-sections.

12. Heat exchanger plate according to any one of claims 1 to 11, **characterized in that** the connection piece (6) has a coupling section (9) on the opening side for connecting a cooling fluid line.

13. Heat exchanger plate according to claim 12, **characterized in that** an abutment body in the form of an annular bead (20) is formed in the coupling section (9).

## Revendications

1. Plaque d'échangeur de chaleur, qui présente un corps de plaque (2) composé d'au moins deux éléments de plaque (3, 4) et au moins une tubulure de raccordement (6) pour un fluide de refroidissement, qui sont assemblées les uns aux autres par soudage, la tubulure de raccordement (6) présentant une portion de liaison (7) qui est assemblée dans une portion de réception (8) du corps de plaque (2) formée entre les éléments de plaque (3, 4), un moyen (15) d'arrêt de soudure étant prévu, lequel limite le flux de soudure lors de la réalisation de l'assemblage soudé, **caractérisée en ce que** la portion de liaison (7) présente deux nervures longitudinales (28) dirigées vers l'extérieur et la portion de réception (8) présente deux rainures longitudinales (29) s'étendant dans la zone du plan d'assemblage (FE) entre les éléments de plaque (3, 4), les nervures longitudinales (28) s'étendant dans les rainures longitudinales (29).

2. Plaque d'échangeur de chaleur selon la revendication 1, **caractérisée en ce que** le moyen (15) d'arrêt de soudure est formé par un métal qui présente une température de fusion plus élevée que le matériau de soudure (11) utilisé.

3. Plaque d'échangeur de chaleur selon la revendication 1 ou la revendication 2, **caractérisée en ce que** le moyen (15) d'arrêt de soudure est disposé sur la portion de liaison (7) de la tubulure de raccordement (6).

4. Plaque d'échangeur de chaleur selon la revendication 3, **caractérisée en ce que** le moyen (15) d'arrêt de soudure est agencé dans la direction longitudinale (L) de la portion de liaison (7) devant et/ou derrière un matériau de soudure (11) appliqué sur la portion de liaison (7).

5. Plaque d'échangeur de chaleur selon l'une des revendications 1 à 4, **caractérisée en ce que** le moyen (15) d'arrêt de soudure est formé par un bourrelet annulaire (16) se trouvant côté frontal sur la portion de réception (8).

6. Plaque d'échangeur de chaleur selon la revendication 5, **caractérisée en ce que** le bourrelet annulaire (16) est formé d'un seul tenant et en un seul matériau à partir de la paroi (17) de la tubulure de raccordement (6).

7. Plaque d'échangeur de chaleur selon la revendication 1, **caractérisée en ce que** le moyen (15) d'arrêt de soudure est réalisé par un changement en section transversale dans la portion de liaison (7) et dans la portion de réception (8).

8. Plaque d'échangeur de chaleur selon l'une des revendications 1 à 7, **caractérisée en ce que** la portion de liaison (7) est circulaire en section transversale.

9. Plaque d'échangeur de chaleur selon l'une quelconque des revendications 1 à 7, **caractérisée en ce que** la portion de liaison (7) est de forme elliptique en section transversale.

10. Plaque d'échangeur de chaleur selon l'une des revendications 1 à 7, **caractérisée en ce que** la portion de liaison est configurée rectangulaire en section transversale avec des angles arrondis.

11. Plaque d'échangeur de chaleur selon l'une des revendications 1 à 10, **caractérisée en ce que** la portion de liaison (7) et la portion de réception (8) présentent respectivement deux sections de longueur (39, 40 ; 42, 43) avec des sections transversales différentes l'une de l'autre.

12. Plaque d'échangeur de chaleur selon l'une des revendications 1 à 11, **caractérisée en ce que** la tubulure de raccordement (6) présente côté ouverture une portion de couplage (9) pour le raccordement à une conduite de fluide de refroidissement.

13. Plaque d'échangeur de chaleur selon la revendication 12, **caractérisée en ce que** dans la portion de couplage (9), un corps de butée est réalisé sous la forme d'un bourrelet annulaire (20).
